# FASCICULE DE BREVET EUROPEEN

(11) **EP 0 618 875 B1**
(45) Date de publication et mention de la délivrance du brevet: **05.02.1997**
(21) Numéro de dépôt: 93911663.8
(22) Date de dépôt: 29.12.1992
(51) Int. Cl.: B65D 65/46, C08L 5/00

(54) **COMPOSITION POUR LA FABRICATION D'UN FILM AU MOINS PARTIELLEMENT BIODEGRADABLE ET FILM AINSI OBTENU**
ZUSAMMENSETZUNG ZUR HERSTELLUNG EINER ZUMINDEST TEILWEISE BIOLOGISCH ABBAUBAREN FOLIE SOWIE EINE SOLCHE FOLIE
COMPOSITION FOR THE FABRICATION OF A FILM AT LEAST PARTIALLY BIODEGRADABLE AND FILM THUS OBTAINED

(30) Priorité: 31.12.1991 FR 9116485
(43) Date de publication de la demande: 12.10.1994
(73) Titulaire: C.R.E.C.A., F-29000 Quimper (FR)
(72) Inventeur: TROADEC, Jean-René, F-29128 Trégunc (FR)
(74) Mandataire: Le Faou, Daniel
(86) Numéro de dépôt international: FR9201240
(87) Numéro de publication internationale: WO9312986

(56) Documents cités:
- FR-A- 2 605 335
- US-A- 4 992 220
- PATENT ABSTRACTS OF JAPAN vol. 16, no. 76 (C-914)25 Février 1992 & JP,A, 32 69 059

## Description

La présente invention concerne une composition pour la fabrication d'un film au moins partiellement biodégradable. Ce film est destiné à constituer en lui-même un emballage ou à être contrecollé sur au moins une paroi d'un support qui forme un emballage.

L'invention concerne également le film obtenu à partir de cette composition.

Une très grande partie des emballages utilisés à l'heure actuelle sont formés de matières plastiques. Cette tendance découle du faible coût et de la grande maléabilité industrielle de ces matières, ainsi que du nombre varié de formes sous lesquelles elles peuvent être employées.

Parmi celles-ci, le polyéthylène, le polyester et le chlorure de polyvinyle sont les plus fréquemment utilisés.

Toutefois, ces polymères sont issus essentiellement du craquage du pétrole, cette technique nécessitant la consommation d'une quantité d'énergie relativement importante. Or, de nombreux pays ont maintenant pour objectif de réduire leur consommation énergétique.

De plus, les pays industrialisés, pour des raisons d'ordre écologique, tendent à réduire l'emploi des matières plastiques, notamment pour l'emballage. Il est en effet bien connu que ces matériaux présentent une aptitude à se dégrader très faible ou nulle. Ils constituent de ce fait une source de pollution importante.

On a bien entendu proposé de modifier les polymères synthétiques utilisés en tant qu'emballages, par exemple en modifiant leur structure ou en les couplant avec d'autres molécules, pour les rendre sensibles au processus de dégradation naturelle. Toutefois, les matériaux obtenus ne se dégradent que très partiellement, ce qui apparaît insuffisant compte tenu des énormes quantités d'emballages employés.

La prise de conscience des consommateurs vis-à-vis des problèmes écologiques a provoqué une désaffection de ceux-ci pour les emballages en matière plastique au profit d'emballages constitués par des produits d'origine naturelle. Malheureusement, ces produits d'origine naturelle n'offrent pas les mêmes caractéristiques que les matières plastiques. C'est notamment le cas du papier et du carton. Avec ces matériaux, on ne peur pas obtenir des emballages se présentant sous la forme d'un film.

De plus, ces matériaux présentent également l'inconvénient d'être perméables à l'humidité et aux graisses. C'est pourquoi on a plus souvent recours à des conditionnements composites formes d'une couche de papier ou de carton et d'une épaisseur de film en matière plastique contrecollée à l'intérieur de l'emballage, en vue de donner à ce dernier une bonne qualité d'étanchéité à l'humidité et aux grasses. Bien entendu, ce type d'emballage présente un degré de biodégrabilité supérieur aux emballages tout en matière plastique mais il n'en reste pas moins difficile à dégrader et, de ce fait, est source de pollution.

L'abrégé du document JP-A-32 69 059 se rapporte à une composition polymère présentant des propriétés de biodégradabilité et de désintégrabilité.

Cette composition comprend un polymère synthétique, une algue de mer broyée et un extrait de celle-ci par exemple de l'acide alginique ou un de ses sels. Si nécessaire, des adjuvants tels que des stabilisants antioxydants etc. sont inclus dans la composition.

Le document FR-A-2 605 335 se rapporte à une feuille multicouches formée d'une nappe de matériau biodégradable tel qu'un tissu, dont au moins une face est protégée par une couche superficielle. Cette couche peut être constituée d'une émulsion ou d'une enduction de latex renfermant des adjuvants appropriés ayant pour fonction de rompre le caractère homogène de la couche superficielle.

Un objectif de la présente invention est de proposer une composition pour la fabrication d'un film utilisable à titre d'emballage, qui présente une aptitude améliorée à se dégrader.

Un second objectif de l'invention est de fournir une composition dont au moins une partie est formée de matériaux facilement disponibles et/ou dont la fabrication ne nécessite pas la consommation de grandes quantités d'énergie.

La présente invention vise également à fournir une composition de film permettant d'obtenir des emballages imperméables à l'humidité et/ou aux graisses.

Un autre objectif est de fournir une composition permettant d'obtenir un film pouvant être utilisé directement pour la fabrication d'un emballage ou en tant qu'élément constitutif d'un matériau d'emballage, ce film étant, par exemple, contrecollé contre un support, formé par exemple de papier ou de carton.

Bien entendu, la composition de l'invention permet d'obtenir un film inerte vis-a-vis des produits destinés a' être emballer, notamment lorsque ceux-ci sont constitués par des produits alimentaires.

Cette composition pour la fabrication d'un film au moins partiellement biodégradable, est caractérisée en ce qu'elle comprend un mélange formé :
- d'alginate;
- d'un ou plusieurs composants choisis dans le groupe constitué par la chitine, la coquille d'oeuf, les extraits d'os de seiche, les matériaux pulvérulents obtenus par broyage de coquillages, les composants à base de pulvérulents minéraux, les composants à base de cellulose, les élastomères, les fibres végétales;
- d'une substance apportant des cations bi- ou polyvalents.

Selon d'autres caractéristiques avantageuses mais non limitatives :
- ledit alginate est algal et plus particulièrement d'origine marine ;
- l'alginate est obtenu à partir d'algues choisies dans le groupe constitué par les Chlorophycées, les Rhodophycées, les Phéophycées, ou d'un mélange de celles-ci ;
- lesdites algues sont choisies parmi celles du genre Laminaria, Fucus, Ascophyllum, Sargassum, Saccorhiza ;
- lesdites algues sont choisies parmi les espèces Fucus vesiculosus, Fucus serratum, Laminaria digitata et Laminaria elongata.

De préférence, la composition comprend un alginate et un élastomère.

Dans une autre forme de réalisation, cette composition comprend un alginate et des fibres de cellulose. Encore dans une autre forme de réalisation la composition comprend un alginate, un élastomère et des fibres de cellulose.

Un élastomère préféré est constitué par du latex.

Avantageusement, la composition comprend un matériau apportant des ions Ca⁺⁺.

Dans une forme de réalisation préférée, la composition contient environ 20 à 50% d'alginate.

L'invention concerne également un film obtenu à partir d'une composition conforme à l'une ou l'autre des caractéristiques évoquées ci-dessus.

Afin de le rendre imperméable à l'humidité et/ou aux graisses, ce film est traité à l'aide d'une substance tannante. Cette substance consiste de préférence en un alun, notamment un alun de potassium.

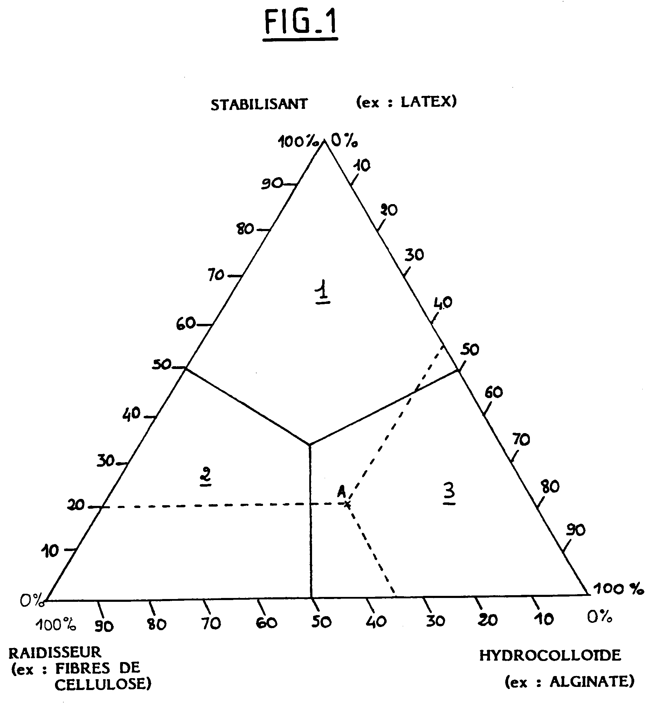

D'autres caractéristiques et avantages de l'invention apparaîtront à la lecture de la description qui va suivre, cette description étant faite en référence au dessin annexe dans lequel la figure 1 est un diagramme triangulaire permettant de déterminer les caractéristiques physiques d'un film obtenu au moyen de la composition de la présente invention en fonction du dosage des composants qui la constituent.

Dans l'ensemble de la description, on entend par "stabilisant" un matériau propre à donner au film des caractéristiques d'élasticité et de souplesse. On entend par "raidisseur" un matériau permettant "d'armer" le film, c'est-à-dire de lui conférer une bonne résistance mécanique, notamment à la traction.

L'alginate utilisable dans le cadre de l'invention est , entre autres, d'origine algale. De préférence, les algues sont choisies parmi les familles constituées par les Chlorophycées, les Rhodophycées et les Phéophycées. On peut utiliser aussi bien des algues marines que des algues d'eau douce. Les algues de culture, de dérive ou d'échouage conviennent également pour la préparation de la composition conforme à l'invention.

Les hydrocolloïdes d'origine algale, encore dénommés phycocolloïdes sont constitués par des polysaccharides, à savoir essentiellement les alginates, les carraghénanes et les agars. Ces polysaccharides, connus pour leurs propriétés épaississante et gélifiante, sont esentiellement contenus au niveau des parois cellulaires des macro-algues.

D'autres alginates peuvent être utilisés dans le cadre de l'invention, par exemple les alginates de synthèse.

Des exemples de réalisation de films à partir de compositions conformes à l'invention seront exposés ci-après.

Les matériaux préférés, utilisés dans le cadre de ces exemples sont les suivants :

| | |
|---|---|
| - hydrocolloïde : alginate d'origine algale ; | |
| - stabilisant | latex |
| et/ou | et/ou |
| - raidisseur | fibres de cellulose. |

Les alginates sont des polysaccharides que l'on trouve dans les thalles des algues brunes sous forme de gel.

Sous forme calcique, les alginates entièrement réticulés ne sont pas solubles, même à chaud.

Lorsqu'un polysaccharide hydrosoluble est mis au contact de l'eau, les molécules de solvant se fixent d'abord sur les sites disponibles correspondant aux régions les moins "organisées" des macromolécules. On obtient un gel constitué de molécules plus ou moins gonflées suivant les forces de cohésion qui s'exercent entre les macromolécules. Ces gels se forment par association de zones régulièrement plissées qui sont stabilisées par des ions Ca⁺⁺ neutralisant chacun deux charges négatives sur deux chaînes macromoléculaires différentes. Ce modèle de gélification est appelé boîte à oeufs ("egg box model").

Certaines caractéristiques des gels d'alginates les rendent favorables à la formation de films, à savoir :
- barrière aux huiles et matières grasses,
- peu résistant à l'eau (mais plus que les autres colloïdes),
- faible barrière à l'humidité (mais plus forte que les autres colloïdes),
- bonne imperméabilité aux gaz,
- bonne imperméabilité aux micro-organismes.

Dans les essais suivants, on utilisera une solution aqueuse d'acide alginique ou d'alginate de sodium à 5%. Cette solution présente toutes les caractéristiques d'un gel d'alginate.

Le latex ou suc laiteux des plantes à caoutchouc se trouve selon les espèces, dans les cellules, les vaisseaux ou les tubules. Ce suc s'écoule de l'arbre lorsqu'il a été entaillé.

Le latex du caoutchouc naturel est essentiellement une dispersion aqueuse de polyisoprène finement divisé.

Dans les essais suivants, on utilisera le REVULTEX "LA" (marque déposée) qui est un latex de caoutchouc naturel pré-vulcanisé à basse teneur en ammoniaque (concentration en extrait sec 60,5%).

La présence d'ions Ca⁺⁺ ou d'autres cations multivalents dans un solution d'alginate provoque une réticulation (réaction de pontage) entre les chaînes de polysaccharides et empêchent la solubilisation.

Les liaisons par ces ions ne sont pas simplement de type électrostatique mais il s'agit de véritables chélates qui conduisent à la formation de zones agrégées (boîte à oeufs). Ce sont les blocs guluroniques des alginates qui peuvent adopter cette structure.

La présence d'ions Ca⁺⁺ dans la solution ammoniacale de latex provoque un début de réticulation entre les chaînes du polymère.

La présence d'ions Ca⁺⁺, apportés par le chlorure de calcium, provoque la coagulation simultanée des deux constituants d'un mélange (alginate et latex).

L'analyse du spectre d'une solution de latex seul en ultra-violet montre une bande d'absorption avec un maximum à 220 nm. Cette bande correspond à une transition π, π* du polyene de la molécule de latex.

Lorsqu'on ajoute à la solution de latex, l'alginate, on constate qu'il y a un déplacement de cette bande vers les courtes longueurs d'ondes avec un maximum à 198 nm (déplacement hypsochrome).

Ces résultats montrent que l'on forme un nouveau polymère. Les liaisons entre les molécules d'alginate et de latex sont favorisées par les ions Ca⁺⁺. On peut donc supposer qu'il y a un pontage entre les doubles liaisons C=C du polyisoprène et les chaînes de polysaccharides.

Dans les essais suivants, on utilisera une solution de chlorure de calcium à faible concentration (0,001M).

L'utilisation de fibres de cellulose permet d'augmenter la résistance mécanique d'un film à base d'alginate.

La cellulose est un polysaccharide de la série ces β-D-glucane.

Ce polymère naturel joue un rôle structural dans la grande majorité des parois végétales.

Nous allons décrire ci-après une méthode fabrication d'un film en laboratoire.

Suivant le pourcentage en poids sec de chaque composant que l'on désire obtenir dans le film, on introduit une masse connue de chaque solution (solution d'alginate à 5%, solution ammoniacale de latex à 60,5% d'extraits secs) dans un becher. Une fois le mélange homogénéisé, on ajoute 10% de solution de chlorure de calcium (0,001M).

Le mélange ainsi obtenu est étalé sur une plaque de verre à l'aide d'une règle de façon à obtenir la surface la plus régulière possible. La plaque de verre est ensuite placée dans une étuve à 60°C pendant environ 3 heures.

Une fois sec le film ainsi obtenu adhère à la plaque de verre. La plaque de verre est plongée dans une solution d'alun de potassium jusqu'au décollement complet du film.

### 1 - Films à base d'alginate et de latex

On fabrique plusieurs films selon le protocole développé ci-dessus en faisant varier le pourcentage d'alginate et de latex.

Les résultats obtenus sont décrits dans le tableau suivant :

| Composit° du film | | Caractéristiques physiques | Résistance mécanique | Résistance chimique* | Résistance à l'eau |
|---|---|---|---|---|---|
| Alginate | Latex | | | | |
| 0% | 100% | souple | solide | +++ | +++ |
| 16% | 84% | souple | solide | +++ | +++ |
| 30% | 70% | souple | moins solide | +++ | +++ |
| 80% | 20% | cassant | très fragile | +++ | +++ |
| 100% | 0% | cassant | très fragile | +++ | +++ |
| +++ : ce symbole correspond à une bonne résistance du film pendant un temps donné. | | | | | |

| | | | | | |
|---|---|---|---|---|---|
| * : La résistance chimique a été testée en plongeant des morceaux de films dans différentes solutions pendant plusieurs heures (acides : acide acétique, acide chlorhydrique, acide nitrique ; base : soude). | | | | | |

D'après les résultats obtenus, on constate que pour avoir à la fois un film souple et solide, il faut utiliser de préférence un mélange contenant 20% d'alginate et 80% de latex (poids secs).

### 2 - Film à base d'alginate, de latex et de fibres de cellulose

Suivant le protocole décrit plus haut, on réalise un film contenant : 45% d'alginate, 35% de fibres de cellulose, et 20% de latex.

On obtient ainsi un film composé en majorité d'alginate dont les caractéristiques physiques sont : la souplesse, la solidité et la résistance à l'eau.

L'observation au microscope à balayage électronique du film à base d'alginate, de latex et de fibres de cellulose montre des liaisons entre les fibres de cellulose et le mélange d'alginate et latex.

Les propriétés du film obtenu sont regroupées dans le tableau suivant :

| | | |
|---|---|---|
| Résistance aux acides | HCl | bonne résistance |
| | H₂SO₄ | résistance moyenne |
| | CH₃COOH | bonne résistance |
| Résistance aux bases | NaOH | bonne résistance |
| Résistance aux huiles | Paraffine liquide | bonne résistance |
| | huile végétale | bonne résistance |
| | huile de lin | bonne résistance |
| | acide oléïque | bonne résistance |
| Résistance aux températures (1 minute)* | 100° à 180° C | bonne résistance jusqu'à 180°C. A partir de 120°C, au-dessus de 5 mn : instabilité thermique |

| | | |
|---|---|---|
| * A titre comparatif, le temps nécessaire pour le thermoformage d'un film est de 40 secondes pour une température élevée. | | |

Suivant la composition en alginate, latex et fibres de cellulose, on obtient un film avec des caractéristiques physiques différentes. Ces résultats peuvent être représentés sous forme d'un diagramme triangulaire (voir figure 1).

En fonction des pourcentages des différents constituants, on se situe dans l'une des zones 1, 2 et 3, qui correspondent respectivement à des films présentant des caractéristiques accentuées d'élasticité, de résistance mécanique et de bonne aptitude filmogène.

Le point A correspond à une composition comportant 45% d'alginate, 20% de latex et 35% de fibres de cellulose.

On notera que le traitement du film à l'alun, notamment à l'alun de potasse permet d'imperméabiliser le film obtenu.

### 3 - Biodégradabilité des différents films

L'utilisation de composants naturels (alginate, latex, fibres de cellulose) laisse supposer que les films réalisés sent biodégradables. La résistance à l'eau obtenue par le traitement du film à l'alun est suffisante pour que ce film soit utilisé comme emballage. Mais, à long terme, cette résistance diminue, ce qui permet le déclenchement de la biodégradabilité.

Au bout de plusieurs semaines, on constate qu'une colonie de champignons "Cladosporium", déposée sur un échantillon de film s'est développée et le recouvre en totalité.

### 4 - Traitement du carton

L'utilisation du carton comme emballage dans le domaine de l'agro-alimentaire (ex : barquettes) présente des inconvénients car, au contact de l'eau (provenant des aliments), celui-ci perd sa rigidité et se déchire.

Le traitement consiste essentiellement à recouvrir les feuilles de carton d'un film tel qu'obtenu dans les exemples précédents.

L'utilisation de ce type de film permet d'obtenir, après un traitement dans une solution d'alun, un carton résistant un certain temps à l'eau, dont les composants restent d'origine naturelle donc biodégradables.

Les tests ont été effectués sur des feuilles de carton non pré-encollées.

Afin de faciliter l'adhésion du film à base d'alginate sur la feuille de carton, il est nécessaire de traiter celle-ci dans une solution d'acide citrique (0,1M) pendant 10 minutes environ.

L'acide citrique est ensuite éliminé par trois rinçages à l'eau distillée.

La feuille de carton précédemment traitée est plongée dans une solution composée de 55% d'alginate et 45% de fibres de cellulose (poids sec). Cette solution contient 10% de chlorure de calcium (0,001M).

Une fois sèche la feuille de carton se trouve recouverte d'un film à base d'alginate et de fibres.

On réalise ensuite un traitement de la feuille de carton recouverte d'un film à base d'alginate et de fibres dans une solution d'alun de potassium à 4% (15 minutes). Ce traitement a pour but de lui donner une résistance à l'eau pendant un certain temps.

Par ce traitement, on obtient un carton recouvert d'un film à base d'alginate et de fibres de cellulose.

Les fibres de cellulose ont la particularité d'augmenter la résistance mécanique (solidité, résistance à l'étirement) du carton traité. Cette propriété est facilement mise en évidence par simple comparaison avec du carton non traité.

Le carton étant recouvert d'un film d'alginate et de fibres de cellulose celui-ci possède les mêmes propriétés que le film. Le traitement à l'alun de potassium lui confère une résistance à l'eau, ce qui permet d'éviter qu'il se déchire lorsqu'il est mis en contact avec des matières humides. Ces résultats sont facilement mis en évidence par comparaison avec du carton non traité lors d'une immersion dans l'eau.

Le carton traité possède les mêmes caractéristiques que le film c'est-à-dire, une bonne résistance aux acides, aux bases, et aux huiles.

Pour une fabrication industrielle de la composition conforme à l'invention, on met en oeuvre le processus suivant.

La matière algale est broyée et précipitée en milieu alcalin afin d'obtenir les hydrocolloïdes. Le broyat est ensuite coagulé en milieu acide puis stabilisé par filtration ou par réchauffement.

A la masse ainsi préparée, on incorpore les charges additives choisies parmi les stabilisateurs et les raidisseurs. La masse est ensuite broyée puis traitée par assèchement thermique.

Selon d'autres modes de réalisation, cette masse est traitée par lyophylisation, ultrafiltraton par un rayonnement de micro-ondes ou par désydratation, selon les propriétés recherchées. La masse est alors réduite en granules.

On peut alors utiliser ces granules pour former un film, par exemple par calandrage, soufflage, coextrusion, laminage ou par étirage.

La composition de l'invention permet également de réaliser un film multicouches, avec dans chaque couche des proportions de constituants différentes.

La technique de fabrication de ce type de film s'apparente à la technique papetière.

Il est possible d'introduire dans la composition des charges telles que de la coquille d'oeuf ou de l'os de seiche en poudre. Leur utilisation contribue non seulement à améliorer la résistance mécanique du film mais également à apporter des ions calcium. Le dosage de ces composants doit être ajusté pour ne pas obtenir un film à l'aspect granuleux.

En fonction de la nature des stabilisants et des raidisseurs (origine naturelle ou non), il est possible de faire varier l'aptitude du film à se dégrader. Ainsi, il est possible de fabriquer un film comportant du latex synthétique.

## Revendications

1. Composition de film au moins partiellement dégradable, caractérisé en ce qu'elle comprend un mélange formé :
- d'alginate;
- d'un ou plusieurs composants choisis dans le groupe constitué par la chitine, la coquille d'oeuf, les extraits d'os de seiche, les matériaux pulvérulents obtenus par broyage de coquillages, les composants à base de pulvérulents minéraux, les composants à base de cellulose, les élastomères, les fibres végétales;
- d'une substance apportant des cations bi ou polyvalents.

2. Composition selon la revendication 1, caractérisé en ce que ledit alginate est algal et plus particulièrement d'origine marine.

3. Composition selon la revendication 1 ou 2, caractérisée en ce que l'alginate est obtenu à partir d'algues choisies dans le groupe constitué par les Chlorophycées, les Rhodophycées, les Phéophycées, ou d'un mélange de celles-ci.

4. Composition selon la revendication 3, caractérisée en ce que lesdites algues sont choisies parmi celles du genre Laminaria, Fucus, Ascophyllum, Sargassum, Saccorhiza.

5. Composition selon la revendication 4, caractérisée en ce que lesdites algues sont choisies parmi les espèces Fucus vesiculosus, Fucus serratum, Laminaria digitata et Laminaria elongata.

6. Composition selon l'une des revendications 1 à 5, caractérisé en ce qu'elle comprend un alginate et un élastomère.

7. Composition selon l'une des revendications 1 à 5, caractérisée en ce qu'elle comprend un alginate et des fibres de cellulose.

8. Composition selon l'une des revendications 1 à 5, caractérisée en ce qu'elle comprend un alginate, un élastomère et des fibres de cellulose.

9. Composition selon l'une des revendications 6 ou 8, caractérisée en ce que ledit élastomère est constitué de latex.

10. Composition selon l'une des revendications 1 à 9, caractérisée en ce que ladite substance est une substance apportant des ions Ca⁺⁺.

11. Composition selon l'une des revendications 1 à 10, caractérisée en ce qu'elle comprend environ 20 à 50% en poids d'alginate.

12. Film obtenu à partir d'une composition conforme à l'une des revendications 1 à 11.

13. Film selon la revendication 12, caractérisé en ce qu'il est traité à l'aide d'une substance tannante.

14. Film selon la revendication 13, caractérisé en ce que ladite substance est un alun.

15. Film selon la revendication 14, caractérisé en ce que ladite substance est un alun de potassium.

## Claims

1. At least partially degradable film composition characterized in that it includes a mixture made up:
- of alginate;
- of one or more components chosen from the group consisting of chitin, eggshell, cuttlebone extracts, pulverulent materials obtained by grinding shellfish, components based on pulverulent minerals, cellulose-based components, elastomers, vegetable fibres;
- of a substance providing di- or polyvalent cations.

2. Composition according to Claim 1, characterized in that the said alginate is algal and more particularly of marine origin.

3. Composition according to Claim 1 or 2, characterized in that the alginate is obtained from algae chosen from the group consisting of the Chlorophyceae, the Rhodophyceae, the Phaeophyceae, or of a mixture of these.

4. Composition according to Claim 3, characterized in that the said algae are chosen from those of the genus Laminaria, Fucus, Ascophyllum, Sargassum and Saccorhiza.

5. Composition according to Claim 4, characterized in that the said algae are chosen from the species Fucus vesiculosus, Fucus serratum, Laminaria digitata and Laminaria elongata.

6. Composition according to one of Claims 1 to 5, characterized in that it includes an alginate and an elastomer.

7. Composition according to one of Claims 1 to 5, characterized in that it includes an alginate and cellulose fibres.

8. Composition according to one of Claims 1 to 5, characterized in that it includes an alginate, an elastomer and cellulose fibres.

9. Composition according to either of Claims 6 and 8, characterized in that the said elastomer consists of latex.

10. Composition according to one of Claims 1 to 9, characterized in that the said substance is a substance providing Ca⁺⁺ ions.

11. Composition according to one of Claims 1 to 10, characterized in that it includes approximately 20 to 50 % by weight of alginate.

12. Film obtained from a composition in accordance with one of Claims 1 to 11.

13. Film according to Claim 12, characterized in that it is treated with the aid of a tanning substance.

14. Film according to Claim 13, characterized in that the said substance is an alum.

15. Film according to Claim 14, characterized in that the said substance is a potassium alum.

## Patentansprüche

1. Mindestens teilweise abbaubare Folien(Film)-Zusammensetzung, dadurch gekennzeichnet, daß sie umfaßt ein Gemisch aus
- Alginat;
- einer oder mehreren Komponenten, ausgewählt aus der Gruppe, die besteht aus Chitin, Eierschalen, Sepiaknochen-Extrakten, pulverförmigen Materialien, die durch Mahlen von Muscheln erhalten werden, Bestandteilen auf Basis von pulverförmigen Mineralien, Bestandteilen auf Basis von Cellulose, Elastomeren und Pflanzenfasern; und
- einer Substanz, die bi- oder polyvalente Kationen liefert (aufweist).

2. Zusammensetzung nach Anspruch 1, dadurch gekennzeichnet, daß das genannte Alginat aus Algen, insbesondere solchen aus dem Meer, besteht.

3. Zusammensetzung nach Anspruch 1 oder 2, dadurch gekennzeichnet, daß das Alginat aus Algen stammt, die ausgewählt werden aus der Gruppe, die besteht aus Chlorophyceae, Rhodophyceae, Pheophyceae oder einer Mischung davon.

4. Zusammensetzung nach Anspruch 1, dadurch gekennzeichnet, daß die genannten Algen ausgewählt werden aus solchen des Genus Laminaria Fucus, Ascophyllum, Sargassum und Saccorhiza.

5. Zusammensetzung nach Anspruch 4, dadurch gekennzeichnet, daß die genannten Algen ausgewählt werden aus den Species Fucus vesiculosus, Fucus serratum, Laminaria digitata und Laminaria elongata.

6. Zusammensetzung nach einem der Ansprüche 1 bis 5, dadurch gekennzeichnet, daß sie ein Alginat und ein Elastomer umfaßt.

7. Zusammensetzung nach einem der Ansprüche 1 bis 5, dadurch gekennzeichnet, daß sie ein Alginat und Cellulosefasern umfaßt.

8. Zusammensetzung nach einem der Ansprüche 1 bis 5, dadurch gekennzeichnet, daß sie ein Alginat, ein Elastomer und Cellulosefasern umfaßt.

9. Zusammensetzung nach einem der Ansprüche 6 oder 8, dadurch gekennzeichnet, daß das genannte Elastomer aus einem Latex besteht.

10. Zusammensetzung nach einem der Ansprüche 1 bis 9, dadurch gekennzeichnet, daß die genannte Substanz eine Substanz darstellt, die Ca⁺⁺-lonen liefert (aufweist).

11. Zusammensetzung nach einem der Ansprüche 1 bis 10, dadurch gekennzeichnet, daß sie etwa 20 bis 50 Gew.-% Alginat umfaßt.

12. Folie(Film), die (der) aus einer Zusammensetzung nach einem der Ansprüche 1 bis 11 hergestellt ist.

13. Folie(Film) nach Anspruch 12, dadurch gekennzeichnet, daß sie (er) mit einer Tannat-Substanz behandelt worden ist.

14. Folie(Film) nach Anspruch 13, dadurch gekennzeichnet, daß die genannte Substanz ein Alaun ist.

15. Folie (Film) nach Anspruch 14, dadurch gekennzeichnet, daß die genannte Substanz ein Kalialaun ist.
